Europäisches Patentamt

European Patent Office

Office européen des brevets

(19)

(11) Veröffentlichungsnummer : **0 128 377**
**B1**

(12) # EUROPÄISCHE PATENTSCHRIFT

(45) Veröffentlichungstag der Patentschrift :
07.09.88

(51) Int. Cl.⁴ : **H 02 B 13/02**

(21) Anmeldenummer : 84105401.8

(22) Anmeldetag : 12.05.84

(54) Trennschalteranordnung für eine ggf. SF6-gasisolierte Hochspannungsschaltanlage.

(30) Priorität : 11.06.83 DE 3321146

(43) Veröffentlichungstag der Anmeldung :
19.12.84 Patentblatt 84/51

(45) Bekanntmachung des Hinweises auf die Patenterteilung : 07.09.88 Patentblatt 88/36

(84) Benannte Vertragsstaaten :
CH DE FR LI SE

(56) Entgegenhaltungen :
EP-A- 0 023 247
DE-A- 1 465 380
GB-A- 2 053 571

(73) Patentinhaber : BBC Brown Boveri Aktiengesellschaft
CH-5401 Baden (CH)

(72) Erfinder : Westbrock, Paul
Schlossgraben 9
D-6460 Gelnhausen-Meerholz (DE)
Erfinder : Peitz, Theo
Mittlere Maingasse 9
D-6450 Hanau 9 (DE)

(74) Vertreter : Kempe, Wolfgang, Dr. et al
c/o BROWN, BOVERI & CIE AG ZPT Postfach 351
D-6800 Mannheim 31 (DE)

EP 0 128 377 B1

Jouve, 18, rue St-Denis, 75001 Paris, France

## Beschreibung

Die Erfindung betrifft eine Trennschalteranordnung nach dem Oberbegriff des Anspruches 1.

Trennschalteranordnungen der eingangs genannten Art, bei denen die einzelnen Kontaktstellen drehbare Kontaktmesser aufweisen, sind an sich bekannt (vgl. DE-OS 1 465 380 für einphasig gekapselte Trennschalter). Bei dreiphasigen Anlagen sind die Kontaktmesser nebeneinander auf einer aus Isolierstoff gebildeten Antriebsachse, kurz Isolierwelle genannt, in der Kapselung angeordnet (vergl. DE-OS 2 924 630) ; weitere Variationen sind nicht bekannt geworden. Bei allen diesen Anordnungen verlaufen im eingeschalteten Zustand die Kontaktmesser annähernd in Flucht der Phasenleiter. Dadurch wird die Baulänge und größe beeinflußt und die Variantenzahl ist beschränkt.

Aufgabe der Erfindung ist es, eine Trennschalteranordnung der eingangs genannten Art zu schaffen, die auf die unterschiedlichsten Arten ausgebildet sein kann, wobei prinzipiell immer gleiche Komponenten verwendet werden können.

Diese Aufgabe wird erfindungsgemäß durch die kennzeichnenden Merkmale des Anspruches 1 gelöst.

Weitere vorteilhafte Ausgestaltungen der Erfindung sind den Unteransprüchen zu entnehmen.

Erfindungsgemäß besitzt also jede Kontaktstelle zwei in Abstand zueinander angeordnete Anschlußstücke an die Phasenleiter, die sich überdecken und parallel zueinander angeordnet sind, wobei das eine Anschlußstück die Isolierwelle (Antriebsachse) mit den Kontaktmessern trägt und das andere Anschlußstück die Gegenkontakte. Wenn das Kontaktmesser in der Einschaltstellung steht, dann werden die beiden sich gegenüberliegenden Anschlußstücke von dem senkrecht zu beiden verlaufenden Kontaktmesser überdeckt. Will man zusätzlich noch einen Erdungskontakt vorsehen, dann wird der Erdungskontakt in der Verlängerung der Verbindungslinie zwischen der Antriebsachse und dem Gegenkontakt auf der gegenüberliegenden Seite liegen, dergestalt, daß das Kontaktmesser aus der Einschaltstellung über die Ausschaltstellung in die Erdungsstellung lediglich eine Drehung von 180° vornehmen muß.

Aufgrund der besonderen Anordnung der Anschlußstücke sind eine große Vielzahl von Varianten möglich.

So kann bspw. ein Trennschalter gebaut werden, bei dem zwei sich gegenüberliegende koaxiale Schottungsflansche vorgesehen sind ; die Anschlußstücke liegen dann symmetrisch beidseitig zu der Mittellinie der beiden Schottungsisolatoren.

Wenn zusätzlich zu den beiden sich gegenüberliegenden Schottungsisolatoren ein dritter Isolator vorzusehen ist, der senkrecht dazu verläuft, dergestalt, daß zwei Phasenleiteranordnungen auf einer Linie und die dritte Phasenleiteranordnung senkrecht dazu verläuft, was zu einem T-förmigen Kapselungsgehäuse führt, dann wird bei Vorsehen eines Trennschalters im Leitungszug für die dritte Phasenleiteranordnung die Kontaktstelle mit den beiden Anschlußstücken senkrecht zu der Verbindungslinie der beiden sich gegenüberliegenden Phasenleiteranordnungen verlaufen ; die beiden Phasenleiteranordnungen werden dann mittels Verbindungsleitern verbunden, die in einer Ebene liegen, und das zweite Anschlußstück, das die Gegenkontakte trägt, ist dann an geeigneter Stelle an den Verbindungsleitern befestigt.

Wenn zusätzlich auch noch in den in einer Linie liegenden Phasenleiterzügen zwei Trennschalter vorgesehen werden sollen, dann werden die ersten Anschlußstücke sich gegenüberliegend ausgerichtet, das zweite Anschlußstück wird in Abstand dazu beide überdeckend angeordnet, wobei das zweite Anschlußstück an einem der senkrecht dazu verlaufenden Phasenleiteranordnung zugeordneten, dem ersten Anschlußstück entsprechenden weiteren Anschlußstück befestigt ist. Die Erdungskontakte können dann wieder in der Verlängerung der Verbindungslinien zwischen den Antriebsachsen und den zugehörigen Kontaktstücken an einem Flanschdeckel befestigt werden. Damit könnten die beiden sich gegenüberliegenden Phasenleiteranordnungen gleichzeitig oder wechselseitig an die dritte Phasenleiteranordnung angeschaltet werden.

Wenn zwei sich gegenüberliegende und fluchtende Phasenleiteranordnungen und eine dritte, senkrecht dazu verlaufende Phasenleiteranordnung vorgesehen ist, dann hat man unter Umständen den Wunsch, zwischen der ersten Phasenleiteranordnung und der dritten Phasenleiteranordnung jeweils einen Trennschalter einzusetzen. Zu diesem Zweck ist das Anschlußstück, das mit der zweiten Phasenleiteranordnung in Verbindung steht, gebogen, wobei das um 90° hin zu der dritten Phasenleiteranordnung gebogene Ende quasi das zweite Anschlußstück für die der dritten Phasenleiteranordnung zugeordnete Kontaktstelle bzw. Trennstelle bildet. An diesem abgebogenen Ende ist zusätzlich das zweite Anschlußstück für die dem ersten Phasenleiter bzw. der ersten Phasenleiteranordnung zugeordnete Trenn- oder Kontaktstelle befestigt und zwar in der üblichen, erfindungsgemäßen Weise.

Die Anordnung mit dem gebogenen Anschlußstück kann auch dann verwendet werden, wenn das Kapselungsgehäuse selbst einen 90° Krümmer darstellt.

Die gleiche erfindungsgemäße Anordnung kann auch dann verwendet werden, wenn hinter dem Trenner ein Kabelabgang vorgesehen ist. Dann wird das zweite Anschlußstück jeweils quer zu den Kabelabgängen in erfindungsgemäßer Weise angeordnet.

Man kann also mit der erfindungsgemäßen Ausführung der Kontaktstelle jede beliebige Trennschalteranordnung herstellen, wobei im wesentlichen gleiche Komponente verwendet werden können.

Anhand der Zeichnung, in der mehrere Ausführungsbeispiel der Erfindung dargestellt sind, sollen die Erfindung sowie weitere Vorteile, Verbesserungen und weitere Ausgestaltungen näher erläutert und beschrieben werden.

Es zeigt :

Figur 1 eine Schnittansicht durch eine erste Ausgestaltung eines erfindungsgemäßen Trenners,

Figur 2 eine zweite Ausgestaltung der Erfindung mit T-förmiger Anordnung,

Figur 3 eine dritte Ausführung der Erfindung mit kreuzförmiger Anordnung und zwei Trennern,

Figur 4 eine vierte Ausgestaltung, ebenfalls mit zwei Trennern,

Figur 5 eine fünfte Ausgestaltung, mit einer Leitungsführung in einem Kreisbogen,

Figur 6 eine sechste Ausgestaltung mit einem Trennschalter,

Figur 7 eine Einsicht in eine Trennschalter-Konstruktion gemäß Figur 1, und

Figur 8 eine Schnittansicht einer formschlüssigen Verbindung zwischen der Isolierstoffantriebswelle und einem Kontaktmesser.

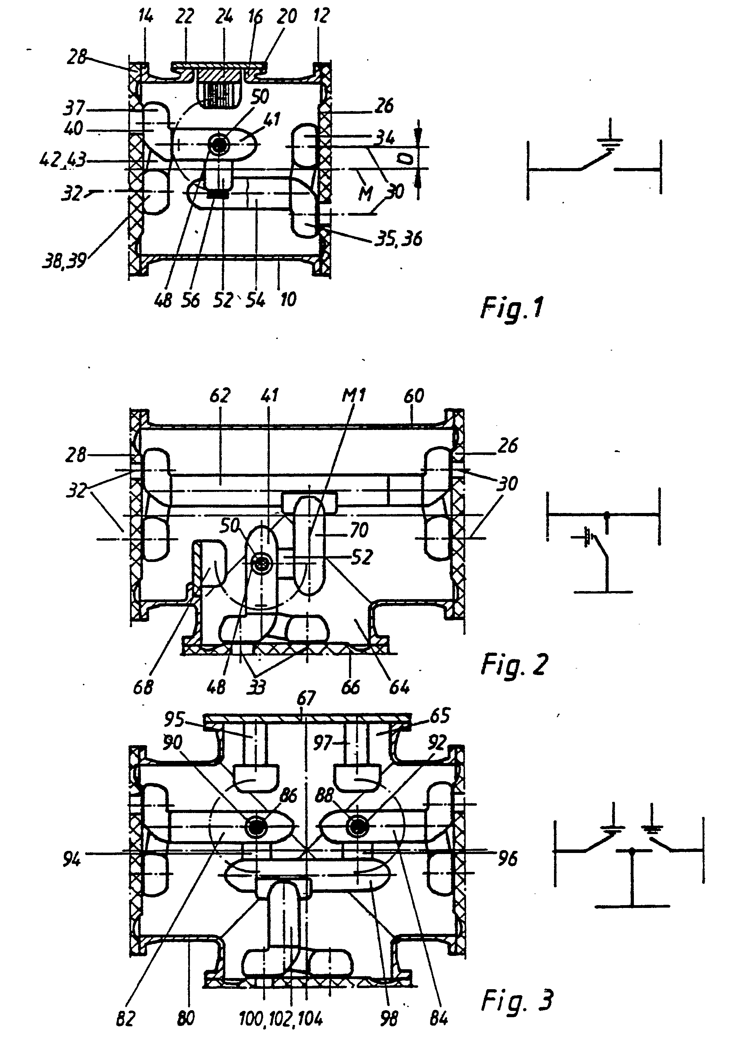

In der Figur 1 ist eine eine geschlossene Einheit bildende erste Trennschalteranordnung gezeigt. Die eigentliche Trenneranordnung ist in einem Kapselungsstück 10 untergebracht, das an beiden Enden in einem Flansch 12 und 14 endet.

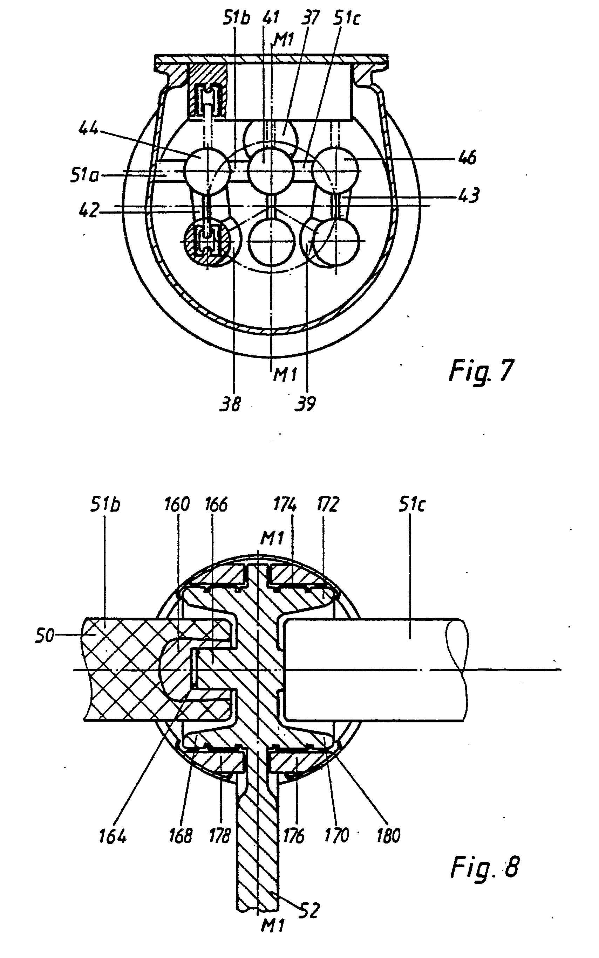

Beidseitig an den Flanschen 12 und 14 schließen sich Schottungs- bzw. Tragisolatoren 26 und 28 an, die zur Halterung von strichpunktiert dargestellten Innenleitern 30 und 32 dienen. Diese Innenleiter 30 bzw. 32 sind in an sich bekannter Weise auf den Ecken eines Dreiecks angeordnet. An die Innenleiter 30 bzw. 32 schließen innerhalb des Kapselungstückes 10 rechte Leitungsstücke 34, 35 und 36 und links 37, 38 und 39 an. Das Leitungs- bzw. Anschlußstück 37 ist mit einem L-förmigen Leitungsstück 40 verbunden, dessen langer Schenkel 41 parallel zur Mittelachse M und in Abstand D dazu angeordnet ist. An die beiden Leitungs- bzw. Anschlußstücke 38 und 39 schließen sich ebenfalls L-förmige Leiterstücke 42 und 43 an, die auch in der Figur 7 erkennbar sind und die so ausgerichtet sind, daß ihre längeren Schenkel in gleicher Weise wie der Schenkel 41 parallel zu diesem im Inneren des Kapselungsteiles 10 mit diesem in einer horizontalen Ebene liegen. Die Schenkel 41, 44 und 46 besitzen je ein Durchgangsloch 48, in der eine Isolierstoff-Antriebswelle 50, auch Isolierwelle 50 genannt, geführt ist, mit der je ein Kontaktmesser 52 für jede Phase fest verbunden ist.

Den Schenkeln 41, 44 und 46 entsprechen mit den Leitungsstücken 34, 35 und 36 verbundene Gegenkontaktschenkel 54, die an ihrem Ende Kontaktfingerelemente 56 aufweisen, mit denen die Kontaktmesser 52 in Kontakt gelangen können.

Oberhalb der Isolier-Antriebswelle 50 ist eine stutzenartige Ausnehmung 16 im Kapselungsteil 10 vorgesehen, die in einem Flansch 20 endet, auf den ein Abschlußdeckel zur Halterung einer ins Innere des Kapselungsteiles 10 ragenden Erdungskontaktvorrichtung 24 befestigt ist.

Die in der Figur 1 dargestellte Lage ist die Einschaltstellung des Trennschalters. Wenn die Kontaktmesser 52 im Uhrzeigersinn um die Achse 50 verschwenkt werden, in dem die Antriebswelle 50 angetrieben wird, dann gelangen die Trennmesser in eine Stellung, die parallel zur Mittelachse des Kapselungsteiles oder Gehäuses 10 verläuft ; der Trennschalter ist ausgeschaltet. Wenn sich die Kontaktmesser im Uhrzeigersinn weiterbewegen, dann kommen sie mit den Erdungskontakten 24 in Eingriff ; in dieser Stellung, in der die Kontaktmesser um 180° nach oben in die senkrecht zur Mittelachse M verlaufende Stellung, die strichliert dargestellt ist, verschwenkt sind, befinden sie sich in der Erdungsstellung, wobei der Trennschalter geöffnet ist. Die Stellung, in der die Kontaktmesser nach oben weisen, ist die in dem zugeordneten Schaltbild dargestellte Stellung.

Die Figur 2 zeigt eine in einer Kapselung 60 befindlichen Trennschalteranordnung, die im Zuge einer dreiphasigen Sammelschiene als Abgangstrennschalter eingebaut ist. Beidseitig an der Kapselung sind die Isolatoren 26 und 28 angeflanscht und tragen die Phasenleiter 30 bzw. 32. Die einzelnen Phasenleiter 30 und 32 sind mittels Verbindungsleitern 62 aneinander verbunden, die parallel zueinander so geführt sind, daß sie in einer horizontalen Ebene liegen. Die Kapselung 60 besitzt eine senkrecht zur horizontalen Mittelachse verlaufende Offnung 64, deren Abmessungen den Flanschen links und rechts an der Kapselung 60 entsprechen und an die sich ein den Isolatoren 26 bzw. 28 entsprechender Isolator 66 anschließt, der senkrecht zu den Phasenleitern 32 bzw. 30 verlaufende Phasenleiter 33 haltert. An den Phasenleitern 33 sind Anschlußteile angeschlossen, die den Anschlußteilen 40, 42 und 43 sowie 44 und 46 entsprechen und die aus diesem Grunde nicht mit Bezugsziffern bezeichnet sind. An dem Anschlußteil schließen sich ähnlich wie bei der Ausführung der Figur 1 Anschlußstück 41 an, die parallel zueinander senkrecht zu den Verbindungsleitern 62 verlaufen und je eine Durchgangsbohrung 48 aufweisen, die von der Antriebswelle 50 durchgriffen sind. Mit der Antriebswelle 50 sind wieder die Kontaktmesser 52 verbunden, die aus der dick ausgezogenen gezeichneten Einschaltstellung in die strichliert gezeichnete Stellung verschwenkt werden können, in der sie in Kontaktierung mit einem Erdungskontakt 68 an der Kapselung 60 gelangen. An den Verbindungsleitern oder -stangen 62 ist je ein Anschlußkontakt 70 angeordnet, der bzw. die in Abstand zu der Mittelachse M1 der Anschlußstelle der Phasenleiter 33 am Flansch an der Öffnung 64 und in gleicher Weise wie die Gegenkontaktschenkel 54 parallel zu den Schenkeln 41 in einem der Kontaktmesserlänge entsprechenden Abstand angeordnet ist bzw. sind. Die Figur 2 enthält ferner auch das zugehörige Schaltbild.

In der Figur 3 ist ein Gehäuse 80 gezeigt, das gegenüber dem Gehäuse bzw. der Kapselung 60 zusätzlich eine der Öffnung 64 entsprechende Öffnung 65 aufweist, die der Öffnung 64 gegenüberliegt und mittels eines Abschlußdeckels 67 verschlossen ist. An dem Gehäuse 80 sind an drei Seiten Phasenleiteranschlüsse angeordnet, nämlich wie bei der Ausführung nach Figur 2 seitlich und unten. Da die Ausgestaltung der Kapselung ähnlich der der Figur 2 ist, ist hierzu nichts ausgeführt. An den horizontalen Phasenleiteranschlüssen schließen sich, miteinander fluchtend und in Abstand zueinander endend Schenkel 82 und 84 an, die Bohrungen 86 und 86 aufweisen, die von je einer Isolierwelle 90 und 92 durchgriffen sind. Mit der Isolierwelle sind Kontaktmesser 94 und 96 fest verbunden, die mit parallel zu den Schenkeln 82 und 84 verlaufenden Leiterstücken 98 in Eingriff gelangen können, welche Leiterstücke 98 an den den Anschlußteilen 41, 42... in ihren Abmessungen entsprechenden Anschlußteilen 100 bis 104 befestigt sind. Die Erdungskontakte 95 und 97 für die Kontaktmesser 94 und 96 sind an dem Abschlußdeckel 67 befestigt und zwar unmittelbar senkrecht oberhalb der Isolierstoffantriebswellen, vom Abschlußdeckel herabhängend. Die Schaltungsausführung ist wieder aus dem Schaltungsbeispiel ersichtlich.

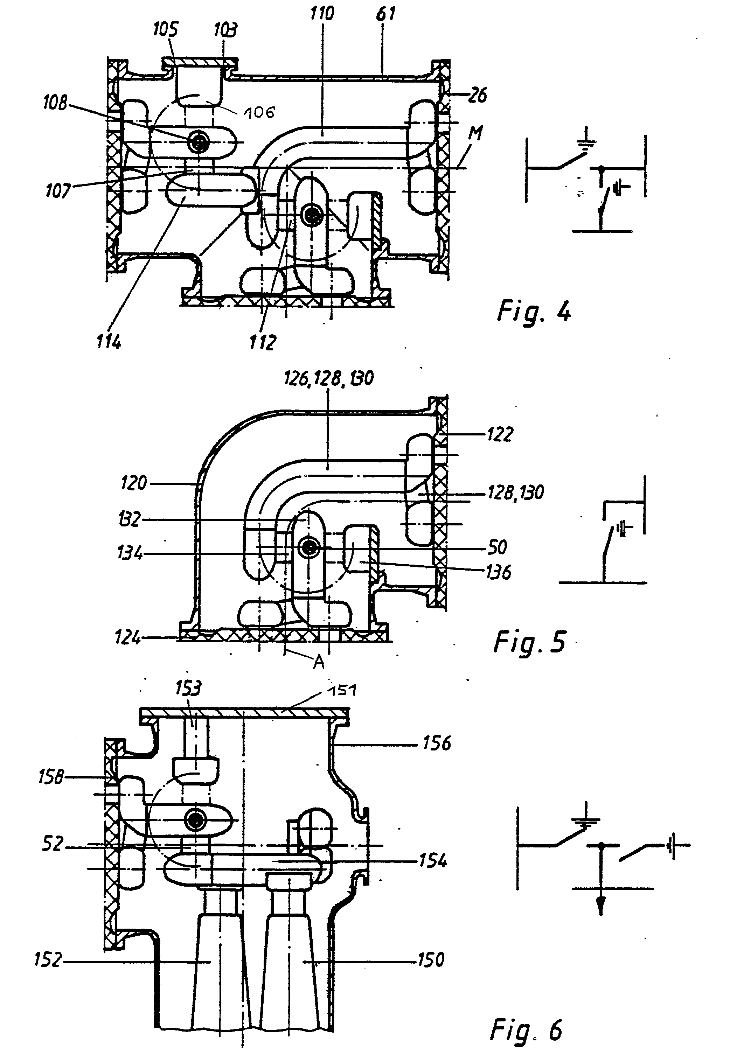

Die Figur 4 zeigt eine der Kapselung der Figur 2 ähnliche Kapselung 61, die sich nur insoweit von der Kapselung 60 unterscheidet, als sie eine der Ausnehmung 16 gleiche Ausnehmung 103 aufweist, die mit einem Deckel 105 verschlossen ist, an dem innen je ein Erdungskontakt 106 für jedes Kontaktmesser 107 vorgesehen ist, die auf einer Isolierwelle 108 befestigt sind. Am rechten Isolator (entspricht dem Isolator 26 der Figur 1) ist je ein Anschlußteil 110 für jede Phase angeschlossen, das von der Anschlußstelle am Isolator 26 aus gesehen jenseits (also in Figur 4 links) von der Mittelachse des Isolators 66 mit Phasenleitern 33 senkrecht nach unten abgebogen ist, so daß mit dem freien Ende der Anschlußteile 110 Kontaktmesser 112 in Eingriff gelangen können, die den Kontaktmessern 52 im Prinzip entsprechen. An dem freien Ende des Anschlußteiles 110 ist ein parallel zur Mittelachse M verlaufendes Anschlußteil 114 befestigt, mit dem ein zweiter Trennschalter in Verbindung gelangen kann, der insoweit dem Trennschalter der Figur 1 entspricht. Das Gehäuse für diese Anordnung entspricht in seinen Abmessungen dem Gehäuse 60 der Figur 2.

In der Figur 5 ist eine weitere Ausführungsform der Erfindung dargestellt. Das Gehäuse ist ein 90°-Krümmer und trägt die Bezugsziffer 120. An der rechten Seite schließen sich ein Tragisolator 122 und nach unten ein Tragisolator 124 an. An dem Tragisolator 122 sind Anschlußstücke 126, 128 und 130 angeschlossen, von denen der eine, der nach vorne hin sichtbare 126, Z-förmig ist, wogegen die anderen beiden, 128 und 130, eine U-Form aufweisen. Das freie Ende der Anschlußstücke 126, 128, 130 ist parallel zu der Abgangsachse A abgebogen ; sie befinden sich in Abstand zu je einem den Anschlußteilen 41 entsprechenden am Flansch 124 anschließenden Anschlußteil 132 für jede Phase. Diese Anschlußteile werden wieder von der Isolierwelle 50 durchgriffen, die die Kontaktmesser 134 antreibt, die mit einem dem Erdungskontakt 68 entsprechendem Erdungskontakt 136 in Eingriff bringbar sind.

Die Anordnung mit dem den Trennschalter aufnehmenden Gehäuse 156 gemäß Figur 6 ist geeignet für einen Kabelabgang. Abgangskabel 150 und 152 sind an ihren Enden jeweils mit einem Anschlußstück 154 die quer zu den senkrecht nach unten verlaufenden Abgangskabeln 152, 150 oberhalb der Enden derselben angeordnet sind, verbunden. Nach links hin ist das Gehäuse 156 mit einem Tragisolator 158 verschlossen, der dem Isolator 28 entspricht. Demzufolge ist die Ausgestaltung der linken Anschlußseite der Figur 6 identisch zu der linken Anschlußseite der Anordnung nach Figur 1 ausgebildet. Die Kontaktmesser, die, um dies zu verdeutlichen, die Bezugsziffer 52 erhalten haben, gelangen dann mit dem Anschlußteil 154 für jedes Abgangskabel 150 bzw. 152 in Verbindung. Nach oben ist das Gehäuse 156 wie das der Figur 3 mit einem Abschlußdeckel 151 abgeschlossen, an dem je ein den Erdungskontakten 95 oder 97 (Figur 3) ähnlicher Erdungskontakt 153 befestigt ist.

In der Figur 6 ist in gleicher Weise wie aus den übrigen Figuren auch das zugehörige Schaltbild dargestellt.

Die Gegenkontakte für die Kontaktmesser sind übliche Fingerkontakte, wie sie an sich bekannt sind.

Die Figur 8 zeigt eine formschlüssige Verbindung zwischen der Isolierstoffantriebswelle 50 und einem Kontaktmesser 52. Die Isolierstoffwelle ist unterteilt in einem mit einem Antriebsvorrichtung (nicht gezeigt) verbundenen Teil 51a, und zwei zwischen den Kontaktmessern befindlichen Anschlußteilen 51b beziehungsweise 51c. Die Figur 8 zeigt das Kontaktmesser 52 in der Mitte, also auf der Mittelachse M1-M1. Damit ist die Isolierstoffwelle in diesem Bereich gebildet aus zwei Teile 51b und 51c. In das freie Ende beider Teile ist ein Kupplungsstück 160 eingesetzt, das als Abschirmung dient.

Das Kupplungsstück 160 besitzt eine sacklochartige Ausnehmung 164, die profiliert ist und in die ein Zapfen 166 am Kontaktmesser 52 eingreift. Der Zapfen 166 ist ringförmig umgeben von einem kreisringartigen Vorsprung 168 am Kontaktmesser, der sich, da das Kontaktstück zu der Mittelachse M1-M1 symmetrisch ist, auf der gegenüberliegenden Seite in den kreisringförmigen Fortsatz 170 verlängert. Dadurch wird im Ganzen gesehen eine Walze 172 gebildet, deren Außenflächen über Lamellenkontakte 174 mit kreisringförmigen Gegenkontakten 176 und 178 verbunden sind, die von einer kugelförmigen Abschirmung 180 umgeben sind und mit den Anschlußstücken 42, 43 beziehungsweise 41 in elektrisch leitendem Kontakt stehen.

**Patentansprüche**

1. Von einer Kapselung (10) umschlossene Trennschalteranordnung für eine vorzugsweise SF₆-gasisolierte Hochspannungsschaltanlage mit wenigstens einer Trennstelle, die eine der Anzahl der Phasenleiter (30, 32, 34) entsprechende Anzahl von Kontaktstellen mit von einer als Isolierwelle ausgebildeten Antriebsachse (50) angetriebenen Kontaktmessern und Gegenkontaktstücken aufweist, dadurch gekennzeichnet, daß jede Kontaktstelle für jede Phase zwei parallel und in Abstand zueinander angeordnete, an die Phasenleiter angeschlossene sich teilweise übergreifende Anschlußstücke (41, 54) aufweist, daß in einem der Anschlußstücke, dem ersten Anschlußstück (41), ein Durchbruch für die Antriebsachse (50) und im anderen, zweiten Anschlußstück gegenüberliegend das Gegenkontaktstück (56) angeordnet sind, wobei das zweite Anschlußstück so bemessen ist, daß es auch die Antriebsachse übergreift, dergestalt, daß sich in Einschaltstellung das Kontaktmesser (52) senkrecht zu den beiden Anschlußstücken (41, 54) und zwischen den beiden Anschlußstücken befindet.

2. Trennschalteranordnung nach Anspruch 1, dadurch gekennzeichnet, daß in der Verlängerung der Verbindungslinie zwischen der Antriebsachse (50) und dem Gegenkontaktstück (56) ein mit der Kapselung (10) verbundener Erdungskontakt (24) vorgesehen ist, wobei der Abstand des Erdungskontaktes von der Antriebsachse dem Abstand des Gegenkontaktstückes von der Antriebsachse entspricht.

3. Trennschalteranordnung nach Anspruch 1 oder 2, dadurch gekennzeichnet, daß die beiden sich gegenüberliegenden Anschlußstücke (41, 54) jeder Kontaktstelle beidseitig vorzugsweise annähernd symmetrisch zu der zugehörigen Mittelachse der Kapselung (10) bzw. der zugehörigen Phasenleiteranordnungen liegen.

4. Trennschalteranordnung nach einem der vorigen Ansprüche, die in der Verbindung zwischen zwei miteinander fluchtenden Phasenleiteranordnungen liegt, denen eine dritte Phasenleiteranordnung senkrecht dazu zugeordnet ist, wobei die Trennstelle der dritten Phasenleiteranordnung zugeordnet ist, dadurch gekennzeichnet, daß das zweite Anschlußstück (70) an einer Verbindungsleitung (62) zwischen den miteinander fluchtenden Phasenleiteranordnungen befestigt ist.

5. Trennschalteranordnung nach einem der Ansprüche 1 bis 3, mit zwei sich gegenüberliegenden, miteinander fluchtenden Phasenleiteranordnungen und einer dritten, senkrecht dazu verlaufenden Phasenleiteranordnung, wobei die Trennstellen den beiden sich gegenüberliegenden Phasenleiteranordnungen zugeordnet ist, dadurch gekennzeichnet, daß das zweite Anschlußstück für jede Kontaktstelle beide sich gegenüberliegenden ersten Anschlußstücke überdeckt und an einem erstem, der dritten Phasenleiteranordnung zugeordneten Anschlußstück (102) befestigt ist.

6. Trennschalteranordnung nach einem der Ansprüche 1 bis 3, mit zwei sich gegenüberliegenden, miteinander fluchtenden Phasenleiteranordnungen und einer dritten, senkrecht dazu verlaufenden Phasenleiteranordnung und mit der ersten und der dritten Phasenleiteranordnung zugeordneten Trennstellen, dadurch gekennzeichnet, daß das zweite Anschlußstück für die der dritten Phasenleiteranordnung zugeordnete Kontaktstelle an einem L-förmigen, mit der zweiten Phasenleiteranordnung verbundenen und angeformten Leitungsstück (110) angeordnet ist und daß das zweite Anschlußstück der der ersten Phasenleiteranordnung zugeordneten Kontaktstelle an der zweiten Phasenleiteranordnung zugeordneten Anschlußstück befestigt ist.

7. Trennschalteranordnung nach einem der Ansprüche 1 bis 3, in einem 90°-Krümmer-Kapselungsgehäuse (120) mit zwei senkrecht aneinander zugeordneten Phasenleiteranordnungen, dadurch gekennzeichnet, daß das zweite Anschlußstück am Ende eines um 90° abgebogenen Leitungsstückes angeformt ist.

8. Trennschalteranordnung nach einem der Ansprüche 1 bis 3, mit einer senkrecht zu einer Phasenleiteranordnung verlaufenden Kabelabgangsanordnung (150, 152), dadurch gekennzeichnet, daß das zweite Anschlußstück (154) senkrecht zu den Kabeln angeordnet und an diesen befestigt ist.

9. Trennschalteranordnung nach einem der vorigen Ansprüche, dadurch gekennzeichnet, daß an jedem Trennmesser beidseitig profilierte Zapfen (166) vorgesehen sind, daß die Isolierwelle (50) geteilt ist und daß die beidseitig angeordneten Zapfen in profilierte, den Zapfen angepaßte Ausnehmungen (164) in der Isolierwelle eingreifen.

10. Trennschalteranordnung nach Anspruch 9, dadurch gekennzeichnet, daß die Zapfen (166) von einem ringförmigen Kragen umgeben sind, dessen Außenfläche eine Walze (172) bildet, die mittels Gleitkontakten in einer Ausnehmung am ersten Anschlußstück aufgenommen und geführt ist.

11. Trennschalteranordnung nach einem der Ansprüche 9 und 10, dadurch gekennzeichnet, daß die Ausnehmungen in den Enden der Isolierachsenteile von in die Isolierwellenteile eingebetteten Abschirmelementen (180) umgeben sind.

**Claims**

1. Isolating-switch arrangement, enclosed by an encapsulation (10), for a preferably SF₆-gas insulated high-voltage switching system having at least one isolating point which is provided with a number of contact points, corresponding to the number of phase conductors (30, 32, 34), with contact blades and opposite contact pieces driven by a drive shaft (50) constructed as an insulating shaft, characterized in that each contact point for each phase is provided with two connecting pieces (41, 54) which partially overlap and which are arranged in parallel with each other and at a distance from each other and which are connected to the phase conductors, and in that, in one of the connecting pieces, the first connecting piece (41), a through-hole for the drive shaft (50) and in the other, second connecting piece located opposite, the opposite contact piece (56) are arranged, the second connecting piece being dimensioned in such a manner that it also overlaps the drive shaft, in such a manner that in the switched-on position the contact blade (52) is perpendicular to the two connecting pieces (41, 54) and between the two connecting pieces.

2. Isolating-switch arrangement according to Claim 1, characterized in that along the extension of the connecting line between the drive shaft (50) and the opposite contact piece (56), an earthing contact (24) connected to the encapsulation (10) is provided, the distance between the earthing contact and the drive shaft corresponding to the distance between the opposite contact piece and the drive shaft.

3. Isolating-switch arrangement according to Claim 1 or 2, characterized in that the two connecting pieces (41, 54), located opposite to each other, of each contact point are on both sides preferably approximately symmetrical with respect to the associated centre axis of the encapsulation (10) or of the associated phase-conductor arrangements, respectively.

4. Isolating-switch arrangement according to any one of the preceding claims, which is located along the connection between two phase-conductor arrangements which are in alignment with each other and which are associated perpendicularly to this arrangement with a third phase-conductor arrangement, the isolating point being associated with the third phase-conductor arrangement, characterized in that the second connecting piece (70) is attached to a connecting line (62) between the phase-conductor arrangements which are in alignment with each other.

5. Isolating-switch arrangement according to any one of Claims 1 to 3, having two phase-conductor arrangements which are in alignment with each other and which are opposite to each other and a third phase-conductor arrangement running perpendicularly to the other arrangements, the isolating points being associated with the two phase-conductor arrangements opposite to each other, characterized in that the second connecting piece for each contact point overlaps two first connecting pieces which are opposite to each other and is attached to a first connecting piece (102) which is associated with the third phase-conductor arrangement.

6. Isolating-switch arrangement according to any one of Claims 1 to 3, having two phase-conductor arrangements which are in alignment with each other and which are opposite to each other and a third phase-conductor arrangement which runs perpendicular to the other arrangements and has isolating points associated with the first and the third phase-conductor arrangement, characterized in that the second connecting piece for the contact point associated with the third phase-conductor arrangement is arranged at an L-shaped line piece (110) connected and moulded to the second phase-conductor arrangement, and in that the second connecting piece of the contact point associated with the first phase-conductor arrangement is attached to the connecting piece associated with the second phase-conductor arrangement.

7. Isolating-switch arrangement according to any one of Claims 1 to 3, in a 90° pipe elbow encapsulation housing (120) having two phase-conductor arrangements which are perpendicularly associated with each other, characterized in that the second connecting piece is moulded to the end of a line piece bent away by 90°.

8. Isolating-switch arrangement according to any one of Claims 1 to 3, with a cable tap arrangement (150, 152) which is perpendicular to a phase-conductor arrangement, characterized in that the second connecting piece (154) is arranged perpendicularly to the cables and is attached to the latter.

9. Isolating-switch arrangement according to any one of the preceding claims, characterized in that on both sides of each isolating blade profiled pins (166) are provided, in that the insulating shaft (50) is divided and in that the pins arranged on both sides engage profiled recesses (169), matching the pins, in the insulating shaft.

10. Isolating-switch arrangement according to Claim 9, characterized in that the pins (166) are surrounded by an annular collar the outer surface of which forms a roller (172) which is accommodated and carried by means of sliding contacts in a recess at the first connecting piece.

11. Isolating-switch arrangement according to any one of Claims 9 and 10, characterized in that the recesses in the ends of the insulating-axle parts are surrounded by shielding elements (180) which are embedded into the insulating-shaft parts.

**Revendications**

1. Agencement de sectionneur enfermé par un blindage (10) pour une installation de commutation à haute tension de préférence isolée au gaz SF$_6$ avec au moins un point de sectionnement, cet agencement possédant un nombre de points de contact, correspondant au nombre des conducteurs de phase (30, 32, 34), avec des lames de contact entraînées par un axe d'entraînement (50) réalisé comme arbre isolant et avec des pièces de contact fixes, caractérisé en ce que chaque point de contact possède pour chaque phase deux pièces de raccordement (41, 54) disposées parallèlement et à distance l'une de l'autre, raccordées aux conducteurs de phase et se recouvrant partiellement, que dans l'une des pièces de raccordement, dite première pièce de raccordement (41), il est prévu une percée pour l'axe d'entraînement (50) et dans l'autre, dite deuxième pièce de raccordement (54), il est prévu en position opposée la pièce de contact fixe (56), la deuxième pièce de raccordement étant dimensionnée de façon qu'elle recouvre également l'axe d'entraînement, de telle sorte qu'en position de fermeture, la lame de contact (52) soit perpendiculaire par rapport aux deux pièces de raccordement (41, 54) et se trouve entre les deux pièces de raccordement.

2. Agencement de sectionneur selon la revendication 1 caractérisé en ce que dans le prolongement de la ligne de liaison entre l'axe d'entraînement (50) et la pièce de contact fixe (56) il est prévu un contact de mise à la terre (24) relié au blindage (10), la distance du contact de mise à la terre à l'axe d'entraînement correspondant à la distance de la pièce de contact fixe à l'axe d'entraînement.

3. Agencement de sectionneur selon la revendication 1 ou 2, caractérisé en ce que les deux pièces de raccordement (41, 54) opposées de chaque point de contact se situent des deux côtés, de préférence de façon à peu près symétrique à l'axe médian correspondant du blindage (10) ou des agencements correspondants de conducteurs de phase.

4. Agencement de sectionneur selon l'une quelconque des revendications précédentes qui se situe dans la liaison entre deux agencements de conducteurs de phase alignés l'un avec l'autre, auxquels est associé perpendiculairement un troisième agencement de conducteur de phase, le point de sectionnement étant associé au troisième agencement de conducteur de phase, caractérisé en ce que la deuxième pièce de raccordement (70) est fixée sur une conduction de liaison (62) entre les agencements de conducteurs de phase alignés l'un avec l'autre.

5. Agencement de sectionneur selon l'une quelconque des revendications 1 à 3 avec deux agencements de conducteurs de phase opposés alignés l'un avec l'autre et un troisième agencement de conducteur ce phase s'étendant perpendiculairement à ceux-ci, le point de sectionnement étant associé aux deux agencements de conducteurs de phase opposés, caractérisé en ce que la deuxième pièce de raccordement recouvre pour chaque point de contact les deux premières pièces de raccordement opposées et est fixée à une première pièce de raccordement (102) associée au troisième agencement de conducteur de phase.

6. Agencement de sectionneur selon l'une quelconque des revendications 1 à 3 avec deux agencements de conducteurs de phases opposés alignés l'un avec l'autre et un troisième agencement de conducteur de phase s'étendant perpendiculairement à ceux-ci, et avec des points de sectionnement associés au premier et au troisième agencements de conducteurs de phase, caractérisé en ce que la deuxième pièce de raccordement pour le point de contact associé au troisième agencement de conducteur de phase est disposée sur une pièce de conducteur (110) en forme de L reliée au deuxième agencement de conducteur de phase, et que la deuxième pièce de raccordement du point de contact associé au premier agencement de conducteur de phase est fixée à la pièce de raccordement associée au deuxième agencement de conducteur de phase.

7. Agencement de sectionneur selon l'une quelconque des revendications 1 à 3 dans un carter (120) de blindage à coude de 90° avec deux agencements de conducteurs de phases associés parallèlement l'un à l'autre, caractérisé en ce que la deuxième pièce de raccordement est formée à l'extrémité d'une pièce de conducteur courbée de 90°.

8. Agencement de sectionneur selon l'une quelconque des revendications 1 à 3 avec un agencement (150, 152) de départ de câbles s'étendant perpendiculairement à un agencement de conducteur de phase, caractérisé en ce que la deuxième pièce de raccordement (154) est disposée perpendiculairement aux câbles et est fixée à ceux-ci.

9. Agencement de sectionneur selon l'une quelconque des revendications précédentes, caractérisé en ce que sur chaque lame de sectionnement il est prévu des deux côtés des doigts (166) profilés, que l'arbre isolant (50) est divisé et que les doigts disposés des deux côtés pénètrent dans des évidements (166) profilés, adaptés aux doigts, dans l'arbre isolant.

10. Agencement de sectionneur selon la revendication 9, caractérisé en ce que les doigts (166) sont entourés par une collerette annulaire dont la surface extérieure forme un rouleau (172) qui est reçu et guidé au moyen de contacts glissants dans un évidement de la première pièce de raccordement.

11. Agencement de sectionneur selon l'une quelconque des revendications 9 et 10, caractérisé en ce que les évidements dans les extrémités des parties de l'axe isolant sont entourés par des éléments de protection (180) noyés dans les parties de l'arbre isolant.

0 128 377

Fig. 1

Fig. 2

Fig. 3

1

0 128 377

**Fig. 4**

**Fig. 5**

**Fig. 6**

2

Fig. 7

Fig. 8